# EUROPEAN PATENT SPECIFICATION

(11) **EP 1 989 348 B1**
(45) Date of publication and mention of the grant of the patent: **08.08.2012**
(21) Application number: 07717232.8
(22) Date of filing: 09.02.2007
(51) Int. Cl.: D04H 1/00, D04H 5/00

(54) **STRETCHABLE ELASTIC LAMINATE AND METHOD OF PRODUCTION**
DEHNBAR ELASTISCHES LAMINAT UND HERSTELLUNGSVERFAHREN DAFÜR
STRATIFIÉ ÉLASTIQUE ÉTIRABLE ET SON PROCÉDÉ DE PRODUCTION

(30) Priority: 10.02.2006 US 772079 P
(43) Date of publication of application: 12.11.2008
(73) Proprietor: Pliant, LLC, Schaumburg, IL 60173 (US)
(72) Inventor: SABBAGH, Amiel, Bassam, Winchester, VA 22601 (US); HOENIGMANN, Martin, F., Chippewa Falls, WI 54729 (US); MIDDLESWORTH, Jeffrey, Alan, Wauconda, IL 60084 (US)
(74) Representative: Dorna, Peter
(86) International application number: PCT/US2007/003537
(87) International publication number: WO 2007/095104

(56) References cited:
- EP-A1- 1 331 090
- US-A- 5 691 034
- US-A- 5 865 926
- US-A1- 2003 051 804
- US-A1- 2003 136 497
- US-B1- 6 258 196
- US-B1- 6 258 196

## Description

### RELATED APPLICATIONS

[Not Applicable]

### BACKGROUND OF THE INVENTION

The presently described technology relates generally to stretchable elastic laminates. More specifically, the present technology relates to stretchable elastic laminates formed from an elastic melt layer and a spunlace non-woven layer having a melt temperature higher than the temperature of the elastic melt at the time the elastic melt contacts the nonwoven.

Disposable absorbent articles (e.g., disposable diapers for children or adults) often include elastic features designed to provide enhanced and sustainable comfort and fit to the wearer by conformably fitting to the wearer over time. Examples of such elastic features may include, for example, elastic waistbands, elastic leg cuffs, elastic side tabs, or elastic side panels so that the absorbent article can expand and contract to conform to the wearer in varying directions. Additionally, such elastic features are often required to be breathable to provide a desired level of comfort to the wearer's skin.

Further, the elastic features of disposable absorbent articles may be made of stretchable elastic laminates. A stretchable elastic laminate typically includes an elastic film and a non-woven fabric. More particularly, the elastic film is typically bonded to the non-woven fabric to form the stretchable elastic laminate.

A nonwoven elastomeric laminate is disclosed, for example, in U.S. published application No. 2005/0287892 A1. According to the disclosure, the nonwoven web is one in which the fibers are thermally bonded to form the web material. An elastomeric film is directly bonded to the nonwoven web layer by feeding the elastomeric film and the nonwoven web to the nip between two calender rollers. Pressure between the calender rollers ranges from about 0.25 to about 5 bar. Pressures at the lower end of the range are stated as being preferred, in order to insure that the elastomeric material does not become deeply embedded in the nonwoven web.

Bonding the elastic film to the non-woven fabric typically requires a secondary bonding operation. For example, U.S. Pat. No. 6,069,097 (the '097 patent) describes forming a stretchable elastic laminate using a secondary bonding operation to bond an elastic film to a non-woven fabric. The '097 patent discloses using a heated embossing roller and a chilled roller to bond a co-extruded elastic film to a spunlace non-woven fabric to form the composite elastic sheet, (col. 14, lines 7-20). Further, the '097 patent discloses that the composite sheet should be bonded in a particular pattern, namely that the composite should be bonded in a direction perpendicular to the direction of elongation, and also that the bond sites should be positioned so that bond sites on either side of the elastic sheet do not overlap with the bond sites on the other side.
US 6,258,196 discloses a laminate formed by laying a B-component layer on top of an A-component layer, after which both layers were pre-pressed. The A-component layer and the B-component layer were then passed between a pair of heating rolls with the B component layer on top.

Additionally, for example, U.S. Pat. App. Pub. No. 200410121687 (the '687 publication) describes forming a stretchable elastic laminate using a secondary bonding operation to bond an elastic film to a non-woven fabric. The '687 publication discloses that a stretchable laminate is formed using nip rolls 46, 48 to bond an elastomeric sheet 14 to an extensible nonwoven web **12** (paragraph 0088). According to the '687 publication, the extensible nonwoven web 12 may be laminated to the elastomeric sheet by a variety of processes including but not limited to adhesive bonding, point bonding, ultrasonic welding and combinations thereof (paragraph 0090).

Furthermore, the '687 publication also describes the extensible nonwoven web 12 as "a necked spunbonded web, a necked meltblown web or a necked bonded carded web" (paragraph 0065). Moreover, stretching the nonwoven web in one direction not only causes necking in the other direction, but may also cause the nonwoven web to become thicker. A variation in thickness may require more complicated set-up procedures and additional processing equipment when utilizing the nonwoven web in different manufacturing operations, thus resulting in increased manufacturing costs. Further, necking of the nonwoven web may cause orientation of the fibers which may result in a striated appearance that may not be aesthetically pleasing.

Employing a secondary bonding operation to form the stretchable laminate typically increases the production cost of the stretchable elastic laminate. Thus, there is a need for a low-cost stretchable elastic laminate that does not require a secondary bonding operation.

Improving the elasticity of the stretchable elastic laminate typically requires stretch activation, which typically requires a secondary stretching operation. For example, U.S. Pat. No. 6, 313,372 (the '372 patent) relates to a stretch-activated plastic composite. According to the '372 patent, "it may be desirable that such stretch activation be done either prior to or during production of a product using the composite" (col. 4, lines 37-39).

Additionally, for example, the '687 publication describes stretching a non-woven fabric with two pairs of rollers, each pair of rollers operating at a different speed. More particularly, the '687 publication describes necking an extensible nonwoven web 12 using a first nip 30, including nip rolls 32, 34 turning at a first surface velocity, and a second nip 36, including nip rolls 38, 40 turning at a second surface velocity that is higher than the first surface velocity (paragraph 0085). The '687 publication also describes mechanically stretching the laminate 50 using grooved rolls 58, 60 (paragraph 91) or a tenter frame 66 (paragraph 92).

Therefore, the secondary stretching operation typically increases the production cost of the stretchable elastic laminate. Thus, there is a need for a low-cost stretchable elastic laminate with improved elasticity that does not require a secondary stretching operation.

### BRIEF SUMMARY OF THE INVENTION

The presently described technology is directed to a stretchable laminate that has improved stretch properties such as improved elongation to break and low permanent deformation.

In one aspect, the present technology is directed to a stretchable laminate that includes a spunlace nonwoven fabric that is stretchable in at least one direction and an elastic material extruded as a melt onto a major surface of the non-woven fabric such that the melt forms an elastic layer bonded to the surface of the nonwoven fabric.

In another aspect, the present technology is directed to a stretchable laminate that includes a nonwoven fabric that is stretchable in at least one direction, and an elastic material applied as a melt to a major surface of the nonwoven fabric, wherein the nonwoven fabric has a melting point or softening point that is greater than the temperature of the melt when the melt is applied to the surface of the nonwoven fabric, and wherein the melt forms an elastic layer bonded to the surface of the nonwoven fabric.

In another aspect, the present technology is directed to a method of making a stretchable laminate which includes heating an elastic material to form an elastic melt and applying the melt to a major surface of at least one spunlace nonwoven fabric layer wherein the spunlace fabric is stretchable in at least one direction, to form an elastic layer bonded to the surface of the spunlace nonwoven fabric.

Still another aspect of the present technology is directed to a method of making a stretchable laminate which includes heating an elastic material to form an elastic melt, and applying the melt to a major surface of a nonwoven fabric to form an elastic layer bonded to the surface of the nonwoven fabric, wherein the nonwoven fabric has a softening or melting point that is greater than the temperature of the elastic melt when the elastic melt is applied to the surface of the nonwoven fabric.

### BRIEF DESCRIPTION OF SEVERAL VIEWS OF THE DRAWINGS

While the specification concludes with claims particularly pointing out and distinctly claiming the subject matter which is regarded as the presently described technology of the present invention; it is believed that the presently described technology will be more fully understood from the following description taken in conjunction with the accompanying figures, In which:

FIG. 1 is a schematic diagram showing a process for manufacturing the stretchable elastic laminate of the present technology;

FIG. 2 is a graphical illustration of hysteresis curves for a laminate made in accordance with the prior art;

FIG. 3 is a graphical illustration of hysteresis curves for one embodiment of a laminate made in accordance with the present technology;

FIG.. 4 is a graphical illustration of hysteresis curves for an alternative embodiment of a laminate made in accordance with the present technology.

FIG. 5 is a graphical illustration of hysteresis curves for a further embodiment of a laminate made in accordance with the present technology.

### DETAILED DESCRIPTION OF THE PREFERRED EMBODIMENTS

The stretchable elastic laminates, methods of producing such laminates, and articles incorporating the stretchable elastic laminates of the presently described technology are suited for a variety of uses and applications, in particular for use in garments, such as a disposable absorbent article.

As used herein, the term "absorbent article" refers to a device which absorbs and contains body exudates, and more specifically, refers to a device which is placed against the skin of a wearer to absorb and contain the various exudates discharged from the body. Examples of absorbent articles include diapers, pull-on pants, training pants, incontinence briefs, diaper holders, feminine hygiene garments, and the like.

The term "disposable" is used herein to describe absorbent articles, which generally are not intended to be laundered or otherwise restored or reused as absorbent articles, but rather discarded after use by the wearer.

The term "elastic" refers herein to any material that upon application of a force to its relaxed, initial length can stretch or elongate without substantial rupture and breakage by at least 50% of its initial length, and which can recover at least 30% of its initial length upon release of the applied force.

The term "spunlace nonwoven fabric" as used herein refers to a structure of individual fibers or threads which are physically entangled, without thermal bonding. Physical entanglement may be achieved using a water entanglement process or alternatively, a needling process or a combination of both processes. Spunlace nonwoven fabric is distinguishable from "spun-bonded nonwoven fabric" in that spun-bonded nonwoven fabric has thermal bonding points between individual fibers in the nonwoven fabric, such that the fibers are thermally bonded into a cohesive web.

The term "machine direction" for a nonwoven fabric, web or laminate refers to the direction in which it was produced. The terms "cross direction" or "transverse direction" refer to the direction perpendicular to the machine direction.

The terms "stretchable" or "extensible" refer herein to a material that can be stretched, without substantial breaking, by at least 50% of its relaxed, initial length in at least one direction. The term can include elastic materials, as well as nonwovens that are inherently extensible, but do not recover. Such nonwovens can be made to behave in an elastic manner by bonding them to elastic films.

The stretchable laminate of the present technology comprises at least one spunlace nonwoven fabric and an elastic material extruded as a melt onto a major surface of the nonwoven fabric, wherein the melt forms an elastic layer bonded to the surface of the nonwoven fabric. In a preferred embodiment, the laminate is a 3-layer laminate in which an elastic layer is sandwiched between two nonwoven fabric layers, with at least one of the nonwoven fabric layers being formed from a spunlace nonwoven fabric.

The spunlace nonwoven fabric used herein is made from a material having a melting point or softening point that is greater than the temperature of the elastic melt at the time the elastic melt contacts the spunlace nonwoven fabric. Selecting a spunlace nonwoven fabric with a melting point or softening point greater than the temperature of the elastic melt at the time of contact insures that melting of the fibers in the spunlace nonwoven fabric does not occur when the elastic melt is extruded onto the surface of the nonwoven fabric.

Suitable materials for the spunlace nonwoven fabric include high melting temperature materials, such as polyethylene terephthalate (PET), polybutylene terephthalate (PBT), polypropylene terephthalate (PPT), polyacrylonitrile (PAN), polyamides, including polyamide 6 and polyamide 6.6, and polyacrylate (PAC). Other suitable materials for the spunlace nonwoven fabric include materials that do not have a true melting point, but have a high softening temperature range or a high decomposition temperature. Such materials include viscose, aramide, (known commercially as Nomex^{™}), polyvinylalcohol (PVA) (known commercially as Vinylon^{™}), and Rayon. A preferred material for the spunlace nonwoven fabric is PET having a melting point of approximately 260°C. A suitable PET spunlace nonwoven fabric is commercially available from Tomen America Inc. of New York, New York, under the product name Tomlace PET. Other suppliers of PET spunlace nonwoven fabric may include Sandler Vliesstoffe of Germany and BBA Group of Brentwood, Tennessee.

The spunlace nonwoven fabric may have a basis weight of about 20 to about 80 gsm and is stretchable in an amount of about 50% to about 200% of its initial length. In general, spunlace nonwoven fabrics having a basis weight at the upper end of the range have better strength and are more stretchable than lower basis weight spunlace nonwovens, but are also more expensive. A suitable spunlace nonwoven fabric for use herein has a basis weight of about 30 grams per square meter (gsm) and is stretchable in the cross-direction.

Use of a spunlace nonwoven fabric made from a material having a high melting or decomposition temperature provides a surprisingly high level of laminate elongation compared to other nonwoven fabrics having thermal bonding points. Without wishing to be bound by a particular theory, it is believed that there are three attributes that help create the high level of elongation. First, the high melting or decomposition temperature of the nonwoven (for a PET nonwoven around 260°C) allows it to retain its fiber integrity even when in contact with the melted elastic material. Second, the relative incompatibility of the nonwoven fabric with the polymers used to form the elastic layer keeps the elastic melt from wetting out the nonwoven fibers and causes the attachment of the nonwoven fabric to the melted elastic material to be a physical trapping of the surface fibers rather than a full chemical bond. This physical trapping helps to allow some sliding of the nonwoven fibers, thereby contributing to the level of elongation. Third, the spunlace nonwoven, being a physically entangled nonwoven rather than a thermally bonded nonwoven, may allow some fiber sliding without requiring much physical separation between the nonwoven fabric and the elastic layer.

The use of a spunlace nonwoven fabric in a stretchable laminate provides additional advantages. For example, the spunlace fabric lends itself to the addition of liquid absorbing natural fibers to the spunlace fabric. Since manufacture of the present laminate does not depend on nonwoven melting to achieve attachment between the elastic layer and the nonwoven fabric, natural fibers that are nonmelting can be added to the spunlace fabric without detrimentally affecting the attachment between the elastic layer and the spunlace fabric. Suitable natural fibers that may be added include cellulose, cotton, wool, flax and hemp. Such added natural fibers contribute to a level of comfort in hygiene applications that cannot be achieved by other nonwoven materials. In addition, natural fibers are biodegradable. By incorporating such fibers into the spunlace nonwoven, or indeed, utilizing a spunlace nonwoven fabric manufactured entirely from natural fibers, and selecting an elastic material that is also biodegradable, the entire elastic laminate structure may be made to be biodegradable, a desirable property for disposable articles to have.

The high temperature resistance of the spunlace fabric may also be used to advantage for high speed "welding" applications where the spunlace nonwoven layer of the laminate is in close proximity to a hot bar or hot wire, and a more delicate, lower melting temperature material on the opposite surface of the laminate could be kept relatively cool. In such applications, the spunlace fabric can withstand the heat from the hot bar or wire without melting and can transfer some of the heat to the lower layers.

The elastic layer which is extruded onto the spunlace nonwoven fabric is formed from one or more thermoplastic materials. Thermoplastic materials suitable for use in the elastic layer or layers in the laminates of the present technology are generally materials that flow when heated sufficiently above their glass transition temperature and become solid when cooled.

Thermoplastic materials that have elastomeric properties are typically called elastomeric materials. Thermoplastic elastomeric materials are generally defined as materials that exhibit high resilience and low creep as though they were covalently crosslinked at ambient temperatures, yet process like thermoplastic nonelastomers and flow when heated above their softening point. Thermoplastic elastomeric materials, in particular block copolymers, useful in practicing the presently described technology can include, for example, linear, radial, star, and tapered block copolymers such as styrene block copolymers, which may include, for example, Kraton® or Kraton®-based styrene block copolymers available from Kraton Polymers, Inc., located in Houston, TX, styrene-isoprene block copolymers, styrene-(ethylene-butylene) block copolymers, styrene-(ethylene-propylene) block copolymers, and styrene-butadiene block copolymers; polyether esters such as that available under the trade designation HYTREL^{™} G3548 from E.I. DuPont de Nemours; and polyether block amides such PEBAX^{™} available from Elf Atochem located in Philadelphia, PA. Preferably, styrene block copolymers are utilized in practicing the presently described technology. Styrene-ethylene butylene block copolymers are most preferred.

Non-styrene block copolymers (elastomers or plastomers) suitable for use in accordance with the presently described technology include, but are not limited to, ethylene copolymers such as ethylene vinyl acetates, ethylene octane, ethylene butene, and ethylene/propylene copolymer or propylene copolymer elastomers, such as those available under the trade designation VISTAMAXX® available from ExxonMobil, located in Irving, Texas, or ethylene/propylene/diene terpolymer elastomers, and metallocene polyolefins such as polyethylene, poly (1-hexane), copolymers of ethylene and 1-hexene, and poly(1-octene); thermoplastic elastomeric polyurethanes such as that available under the trade designation MORTHANE™ PE44-203 polyurethane from Morton International, Inc., located in Chicago, IL and the trade designation ESTANE™ 58237 polyurethane from Noveon Corporation, Inc., located in Cleveland, OH; polyvinyl ethers; poly-α-olefin-based thermoplastic elastomeric materials such as those represented by the formula -(CH2CHR)x where R is an alkyl group containing about 2 to about 10 carbon atoms; poly-α-olefins based on metallocene catalysis such as ENGAGE™ 8200, ethylene/poly-α-olefin copolymer available from Dow Plastics Co., located in Midland, Michigan; polybutadienes; polybutylenes; polyisobutylenes such as VISTANEX NM L-80, available from Exxon Chemical Co.; and polyether block amides such PEBAX™ available from Elf Atochem located in Philadelphia, PA. A preferred elastomer or plastomer of the presently described technology is an ethylene/propylene copolymer or polypropylene copolymer. It is also preferable that the non-styrene block copolymer elastomer or plastomer of the presently described technology comprise from about 10% to about 95% by weight of the elastomeric layer based upon the total weight of the composition. For example, one embodiment of the elastomer or plastomer of the presently described technology may be comprised of a polypropylene copolymer containing from about 50% to about 95% of propylene content.

Additional elastomers which can be utilized in accordance with presently described technology also include, for example, natural rubbers such as CV-60, a controlled viscosity grade of rubber, and SMR-5, a ribbed smoked sheet rubber; butyl rubbers, such as EXXON™ Butyl 268 available from Exxon Chemical Co., located in Houston, TX; synthetic polyisoprenes such as CARIFLEX™, available from Shell Oil Co., located in Houston, TX, and NATSYN™ 2210, available from Goodyear Tire and Rubber Co., located in Akron, OH; and styrene-butadiene random copolymer rubbers such as AMERIPOL SYNPOL™ 1101 A, available from American Synpol Co., located in Port Neches, TX.

The elastic layer can be extruded as a single layer onto the surface of the spunlace nonwoven fabric. Alternatively, the elastic layer can comprise a plurality of elastic layers which are formed by co-extruding the melted elastic materials through a suitable co-extrusion die. For example, the elastic layer can comprise a three layer structure, which allows for a core layer sandwiched between two outer layers.

The elastic material used for each of the different layers of the co-extruded elastic layer can be selected from the elastomeric materials described above in order to vary the level of adhesion between the elastic layer and the nonwoven fabric. Adjusting the level of adhesion between the elastic layer and the nonwoven allows one to obtain a desired balance between laminate stretch and delamination resistance. In one embodiment, the multi-layer elastic layer comprises a KRATON^{™} styrene block copolymer core layer sandwiched between two outer layers formed from VISTAMAXX^{™} elastomer. Alternatively, the outer layers of the multi-layer elastic layer may be tie layers formed from a material that promotes adhesion between the elastic layer and the nonwoven layer or layers. Such tie layers may be formed from compositions known in the art to promote adhesion between incompatible materials. For example, tie layers may be formed from maleic anhydride grafted polyolefins, such as BYNEL® from DuPont or PLEXAR® from Equistar.

The level of adhesion between the elastic layer and the nonwoven may also be adjusted through the use of adhesive fibers, which can provide adhesive bonding between the nonwoven fabric and the elastic layer where a low level of stretch is desired. Such adhesive fibers may include, for example, polyvinyl alcohol fibers, alginic fibers, fibers made from hot melt adhesives, or fibers made from thermoplastic materials having a low softening or melting point.

It will be appreciated by those skilled in the art that additives may be added to the one or more layers of the presently described laminates in order to improve certain characteristics of the particular layer. Preferred additives include, but are not limited to, color concentrates, neutralizers, process aids, lubricants, stabilizers, hydrocarbon resins, antistatics, antiblocking agents and fillers. It will also be appreciated that a color concentrate may be added to yield a colored layer, an opaque layer, or a translucent layer. A suitable neutralizer may include, for example, calcium carbonate, while a suitable processing aid may include, for example, calcium stearate.

Suitable antistatic agents may include, for example, substantially straight-chain and saturated aliphatic, tertiary amines containing an aliphatic radical having from about 10 to about 20 carbon atoms that are substituted by ω-hydroxy-(C1-C4)-alkyl groups, and N,N-bis-(2-hydroxyethyl)alkylamines having from about 10 to about 20 carbon atoms in the alkyl group. Other suitable antistatics can include ethoxylated or propoxylated polydiorganosiloxanes such as polydialkylsiloxanes and polyalkylphenylsiloxanes, and alkali metal alkanesulfonates.

Antiblocking agents suitable for use with the presently described laminates include, but are not limited to, calcium carbonate, aluminum silicate, magnesium silicate, calcium phosphate, silicon dioxide, and diatomaceous earth. Such agents can also include polyamides, polycarbonates, and polyesters.

Additional processing aids that may be used in accordance with the presently described technology include, for example, higher aliphatic acid esters, higher aliphatic acid amides, metal soaps, polydimethylsiloxanes, and waxes. Conventional processing aids for polymers of ethylene, propylene, and other α-olefins are preferably employed in the present technology. In particular, alkali metal carbonates, alkaline earth metal carbonates, phenolic stabilizers, alkali metal stearates, and alkaline earth metal stearates can be used as processing aids.

Fillers may be added to the elastic material to promote a microporous structure within the elastic layer when the layer is stretched. Examples of useful fillers include, but are not limited to, alkali metal and alkaline earth metal carbonates, such as sodium carbonate (Na₂CO₃), calcium carbonate (CaCO₃), and magnesium carbonate (MgCO₃) nonswellable clays, silica (SiO₂), magnesium sulfate, magnesium oxide, calcium oxide, alumina, mica, talc, titanium dioxide, zeolites, aluminum sulfate, barium sulfate, and aluminum hydroxide.

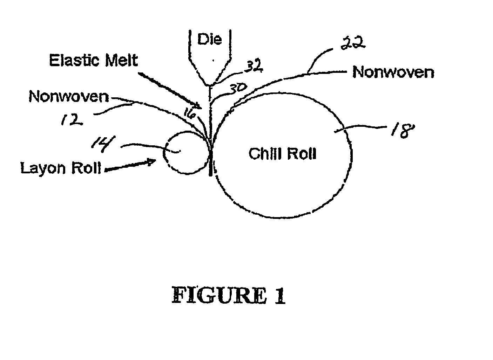

Turning now to FIG. 1, there is schematically illustrated an extrusion lamination process for making a stretchable laminate of the presently described technology. A spunlace nonwoven fabric 12 is unwound from a supply roll (not shown) and travels from the supply roll over a layon roll 14 to a nip 16 created between the layon roll 14 and a chill roll 18. The layon roll 14, which is also known in the art as a pressure roll, is coated with a silicone rubber coating and is typically water cooled or heated. The chill roll 18 is a metal roll that is also typically water cooled or heated. Suitable temperatures for the layon roll and chill roll may be from about 60°F to about 230°F, preferably from about 70°F to about 180°F. A second nonwoven fabric 22, which is preferably also a spunlace nonwoven fabric, is unwound from a second supply roll (not shown) and travels from the second supply roll over the chill roll 18 to the nip 16. Preferably, layon roll 14 travels rotationally at the same surface speed as the chill roll 18.

An elastic material 30 is extruded through a die tip 32 at a temperature above the melting point of the elastic material so that the elastic material is melted. The melted elastic material drops down to the nip 16 where it contacts the spunlace nonwoven fabric 12 and the spunlace nonwoven fabric 22. As the spunlace nonwoven fabrics 12 and 22 and the elastic material 30 travel through the nip 16, compressive force at the nip 16 causes the elastic material to physically entrap the fibers at the surfaces of the nonwoven fabrics, resulting, upon cooling of the elastic material, in a stretchable laminate having an elastic layer bonded to the surfaces of the nonwoven fabrics but not embedded within them. A suitable compressive force at the nip may be from about 30 to about 160 pounds per lineal inch (PLI).

It will be appreciated by those skilled in the art that, although a three-layer stretchable laminate is illustrated in FIG. 1, a similar process can be used to manufacture a two-layer stretchable laminate or, alternatively, a stretchable laminate having more than three layers. In the case of a two-layer stretchable laminate, the spunlace nonwoven fabric can be delivered to the nip 16 either via the layon roll 14 or via the chill roll 18, although preferably it would be delivered via the layon roll 14 with the elastic melt traveling through the nip 16 adjacent to the chill roll 18. Slip agents may be added to the elastic material to minimize adherence of the elastic melt to the chill roll 18. Such slip agents may be, for example, euracylamide, and are well known to those of skill in the art.

It will also be appreciated by those skilled in the art that the compressive force used to bond the elastic layer to the spunlace nonwoven fabric may be generated using techniques other than conveying the elastic melt and the nonwoven fabric through a nip. Such alternative techniques may include, for example, using an air knife to blow the nonwoven fabric into the elastic melt, using a vacuum box to draw the elastic melt down into the nonwoven fabric, using nonwoven web tension to pull the nonwoven fabric into the elastic melt, using a static bar (static electric pressure), or combinations of these alternative techniques.

The stretchable laminate resulting from the extrusion lamination process has sufficient adhesion between the elastic layer and the spunlace nonwoven fabric that delamination of the layers does not occur, yet the adhesion is not so strong that it negatively impacts the stretch properties of the laminate. The adhesion between the elastic layer and the spunlace nonwoven is such that no additional bonding points or bonding steps are necessary to insure that delamination between the layers does not occur. Further, the unexpectedly high level of stretch of the laminate allows the possibility of employing bonding patterns that are selected for their aesthetic merit rather than for their expected contribution to either adhesion levels or stretch levels. For example, a bonding pattern could be a company logo or other decorative pattern. If bonding patterns are desired, they can be imparted to the laminate by employing an engraved or patterned chill roll and/or layon roll.

An additional property achieved by the stretchable laminates of the presently described technology is improved resistance to stretching in the machine direction. This is an important property because it allows the laminate to be easily converted on a manufacturing line. Resistance to stretching is determined by measuring the tensile force required to stretch the laminate 5% in the machine direction. The greater the tensile force, the greater the laminate resists stretching in the machine direction as the laminate is processed through manufacturing equipment.

The improved tensile forces for the stretchable elastic laminates made in accordance with the present technology are achieved without utilizing additional processing techniques, such as necking. The tensile forces at 5% machine direction stretch (tensile at 5% MD) for the stretchable laminates of the presently described technology may be as high as 150 grams, preferably 200 grams, more preferably 250 grams, and most preferably 300 grams or higher.

For some applications, it may be desirable to have a low stretch zone on the elastic laminate in order to assure a secure bond or attachment between the elastic laminate and a nonstretchy substrate. Such a low stretch zone or area can be achieved in the present elastic laminate in a variety of ways. For example, a tie layer coating can be applied to the surface of the nonwoven fabric where a low level of stretch is desired prior to lamination with the elastic melt. The tie layer would not cause appreciable stiffening, but would assure such a complete bond between the nonwoven fabric and the elastic layer that little stretch could occur in the tie layer region. Alternatively, a heavy bonding pattern could be applied to those areas of the laminate where a low level of stretch is desired to insure that there is a complete bond between the nonwoven fabric and the elastic layer. Other approaches known in the art for creating low stretch zones, which are also known in the art as "deadened lanes," may also be utilized. One such approach is to add strips of conventional polypropylene nonwoven fabric In lanes where little stretch is desired. This could be done on one or both sides of the stretchable laminate.

One skilled in the art will recognize that modifications may be made in the presently described technology without deviating from the spirit or scope of the invention. The presently described technology is also illustrated by the following examples, which are not to be construed as limiting the invention or scope of the specific procedures or compositions described herein.

### EXAMPLE 1 (Comparative)

A three layer extrusion laminate was prepared by extruding a melt of an elastic resin from a die, such as die 32 shown in FIG. 1, into the nip between a layon roll, and a chill roll, such as layon roll 14 and chill roll 18 shown in FIG. 1. The melted elastic resin is a styrene-ethylene/butylene-styrene resin available from Kraton Polymers of Houston, Texas under the trade name Kraton G-1657. A first nonwoven web made of carded homopolymer polypropylene having a basis weight of about 22 gsm, travels over the layon roll to the nip and a second, nonwoven web made of the same carded homopolymer propylene travels over the chill roll to the nip where the first and second nonwoven webs each make contact with the elastic melt. Pressure at the nip causes the elastic melt to bond to the surfaces of the first and second nonwoven webs, thus forming a three layer laminate in which the elastic layer is sandwiched between the first and second nonwoven webs.

### EXAMPLE 2

A three layer extrusion laminate was prepared in the same manner, using the same elastic resin melt as the laminate made in comparative Example 1, except that the first and second nonwoven layers are made from a PET spunlace material having a basis weight of 30 gsm which is available from Tomen America, Inc. of New York.

### EXAMPLE 3

A three layer extrusion laminate was prepared in the same manner as Example 2, using the same PET spunlace nonwoven material for the first and second nonwoven layers. However, the elastic layer is a multi-layer structure formed from a co-extruded melt comprising the following:

VISTAMAXX VM100 25% by weight outer layer/KRATON G1657 styrene block copolymer core 50% by weight/VISTAMAXX VM1100 25% by weight outer layer, based upon the total weight of the elastic layer.

### EXAMPLE 4

An extrusion laminate was prepared in the same manner as Example 3, using the same PET spunlace nonwoven material for the first and second nonwoven layers. However, the elastic layer is a multi-layer structure formed from a co-extruded melt wherein the outer layers of the co-extruded multi-layer structure are tie layers. The elastic layer comprises the following:

BYNEL® E418 5% by weight outer layer/KRATON G1657 90% by weight core/BYNEL® E418 5% by weight outer layer.

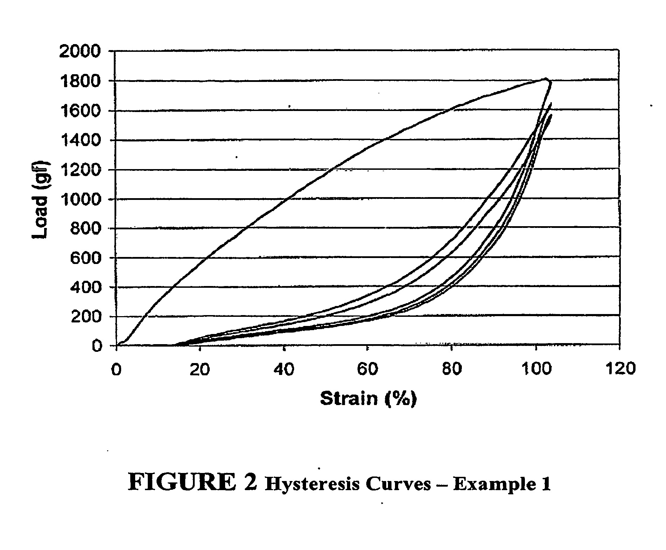

Each of the laminates made in Examples 1-4 have overall thicknesses of about 2 mils and have approximately the same basis weight. The laminates were mechanically tested using an Instron tensile tester. The gap was 2", the crosshead speed was 20"/minute the return speed was the same to measure loading force, hysteresis and elongation. The hysteresis curves from the testing of Examples 1-4 are shown in FIGS. 2-5, respectively. Properties of the laminates made in Examples 1-4 are set forth in Table 1.

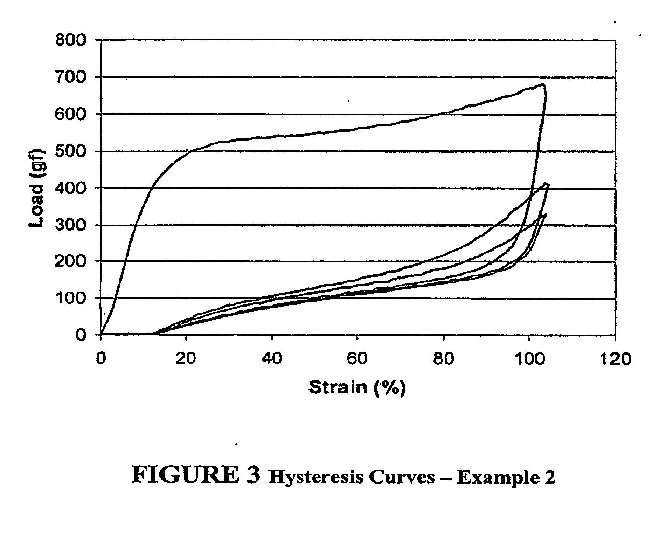

As can be seen from a comparison of the hysteresis curves shown in FIG. 2 for comparative Example 1 (which utilized a thermally bonded carded homopolymer propylene nonwoven for the first and second nonwoven layers), with the hysteresis curves shown in FIG. 3 for Example 2 (which utilized a spunlace PET nonwoven in accordance with the present technology), the force required to extend the Example 1 laminate is over two times the force required to extend the Example 2 laminate, and the load and unload forces on the second and third cycles are much closer together (i.e., low hysteresis) for the Example 2 laminate. Further, as can be seen from the physical properties shown in Table 1, the Example 2 laminate has a much higher elongation to break in the cross or trans direction compared to the Example 1 laminate and has a much higher tensile at 5%: stretch in the machine direction compared to the Example 1 laminate. For the Example 2 laminate the tensile force at 5% MD was 307 grams whereas the tensile force at 5% MD for the Example 1 laminate was only 91 grams. Thus, the tensile force for the laminate made in accordance with the present technology was more than three times greater than that of the Example 1 laminate.

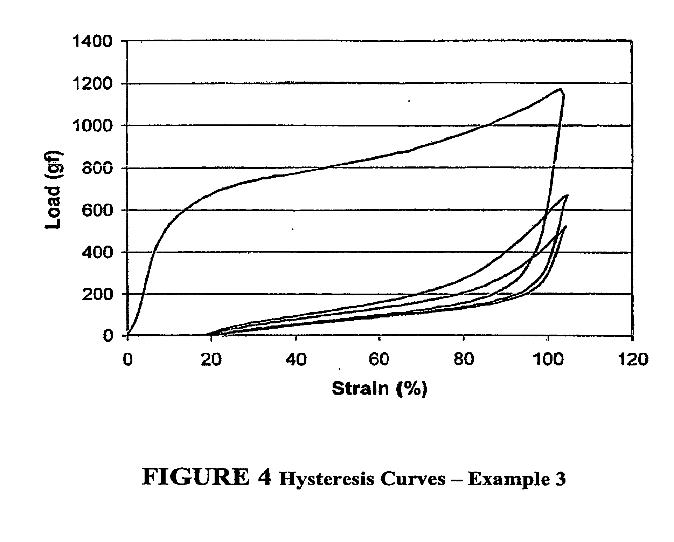

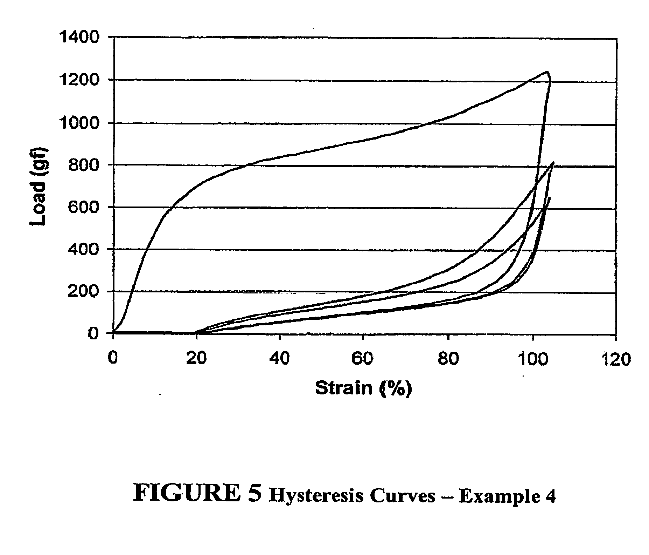

Improved results can also be seen from the hysteresis curves shown in FIGS. 4 and 5, relating to Examples 3 and 4, respectively, compared to the hysteresis curves shown in FIG. 2. The force required to extend the Example 1 laminate is about 50% greater than the force required to extend the Example 3 and Example 4 laminates, and the Example 3 and Example 4 laminates both show low hysteresis. Further, as can be seen from Table 1, the Example 3 and Example 4 laminates also demonstrate excellent elongation to break in the trans direction, as well as excellent tensile force at 5% MD.

**TABLE 1**

| Physical Properties | | Example 1 | Example 2 | Example 3 | Example 4 |
|---|---|---|---|---|---|
| Basis Weight | G/m2 | 91.07 | 107.53 | 105.77 | 107.43 |
| Tensile @ Break MD | Grams | 8032 | 10536 | 12377 | 12910 |
| Elongation @ Break MD | % | 160 | 95 | 84 | 77 |
| Tensile @ Yield MD | Grams | 314 | 610 | 611 | 543 |
| Elongation @ Yield MD | % | 9 | 7 | 7 | 7 |
| Tensile @ 5% MD | Grams | 91 | 307 | 374 | 321 |
| Tensile @ 10% MD | Grams | 466 | 1486 | 1861 | 1742 |
| Tensile @ 25% MD | Grams | 2295 | 5235 | 6706 | 6889 |
| Secant Modulus MD | PSI | 33147 | 81991 | 115077 | 106594 |
| Tensile @ Break TD | Grams | 1935 | 1669 | 2036 | 1790 |
| Elongation @ Break TD | % | 301 | 554 | 469 | 451 |
| Tensile @ Yield TD | Grams | 116 | 342 | 478 | 511 |
| Elongation @ Yield TD | % | 12 | 28 | 24 | 31 |
| Tensile @ 5% TD | Grams | 28 | 37 | 46 | 42 |
| Tensile @ 10% TD | Grams | 87 | 99 | 161 | 130 |
| Tensile @ 25% TD | Grams | 306 | 309 | 487 | 426 |
| Secant Modulus TD | PSI | 2908 | 4763 | 8065 | 6378 |

The Invention has now been described in such full, clear, concise and exact terms as to enable any person skilled in the art to which it pertains, to practice the same. It is to be understood that the foregoing describes preferred embodiments and examples of the invention and that modifications may be made therein without departing from the spirit or scope of the invention as set forth in the claims.

## Claims

1. A stretchable elastic laminate comprising:
at least one spunlace nonwoven fabric that is stretchable in at least one direction ; and
an elastic material applied as a melt onto a major surface of said spunlace nonwoven fabric,
wherein the melt forms an elastic layer bonded to said surface of said spunlace nonwoven fabric,
wherein the elastic layer is comprised of a plurality of layers formed by co-extruding the elastic material and at least one other material.

2. The stretchable elastic laminate of claim 1, wherein the spunlace nonwoven fabric comprises a material selected from the group consisting of polyethylene terephthalate, polybutylene terephthalate, polypropylene terephthalate, polyamides, polyacrylates, polyacrylonitrile, viscose, aramide, polyvinylalwhol and rayon.

3. The stretchable elastic laminate of claim 1, wherein the elastic material comprises a styrene block copolymer.

4. The stretchable elastic laminate of claim 3, wherein the styrene block copolymer comprises SEBS.

5. The stretchable elastic laminate of claim 1, wherein the at least one other material is a second elastic material.

6. The stretchable elastic laminate of claim 1, wherein said laminate comprises a second nonwoven fabric and said elastic material is applied to a major surface of said second nonwoven fabric so that the elastic layer is sandwiched between and bonded to said major surfaces of the spunlace nonwoven fabric and the second nonwoven fabric.

7. The stretchable elastic laminate of claim 6, wherein the second nonwoven fabric is a spunlace nonwoven fabric.

8. The stretchable elastic laminate of claim 1:
wherein said nonwoven fabric has a melting point that is greater than the temperature of said melt when said melt is applied to the surface of said nonwoven fabric, and wherein the melt forms an elastic layer bonded to said surface of said nonwoven fabric.

9. The stretchable elastic laminate of claim 8, wherein the nonwoven fabric comprises natural fibers selected from the group consisting of cellulose, cotton, hemp, wool and flax.

## Patentansprüche

1. Ein dehnbares, elastisches Laminat umfassend: wenigstens ein Spunlace-Faservlies, das wenigstens in eine Richtung dehnbar ist, und ein elastisches Material, das als eine Schmelze auf der Hauptfläche des Spunlace-Faservlieses aufgebracht ist, wobei die Schmelze eine elastische Schicht ausbildet, die mit der Oberfläche des Spunlace-Faservlieses verbunden ist, wobei die elastische Schicht aus einer Vielzahl von Schichten besteht, die durch Co-Extrudieren des elastischen Materials und wenigstens einem anderen Material geformt sind.

2. Das dehnbare, elastische Laminat nach Anspruch 1, wobei das Spunlace-Faservlies ein Material aufweist, das aus der Gruppe ausgewählt ist, bestehend aus Polyethylenterephthalat, Polybutylenterephthalat, Polypropylenterephthalat, Polyamide, Polyacrylate, Polyacrylnitril, Viskose, Aramid, Polyvinylalkohol und Reyon.

3. Das dehnbare, elastische Laminat nach Anspruch 1, wobei das elastische Material ein Styrol-Blockcopolymer umfasst.

4. Das dehnbare, elastische Laminat nach Anspruch 3, wobei das Styrol-Blockcopolymer SEBS umfasst.

5. Das dehnbare, elastische Laminat nach Anspruch 1, wobei das wenigstens eine andere Material ein zweites elastisches Material ist.

6. Das dehnbare, elastische Laminat nach Anspruch 1, wobei der Schichtstoff ein zweites Faservlies aufweist und das elastische Material auf der Hauptfläche des zweiten Faservlieses derart aufgebracht ist, dass die elastische Schicht zwischen der Hauptfläche des Spunlace-Faservlieses und des zweiten Faservlieses in Sandwich-Form eingelegt und damit verbunden ist.

7. Das dehnbare, elastische Laminat nach Anspruch 6, wobei das zweite Faservlies ein Spunlace-Faservlies ist.

8. Das dehnbare, elastische Laminat nach Anspruch 1, wobei das Faservlies einen Schmelzpunkt hat, der größer ist als die Temperatur der Schmelze, wenn die Schmelze auf die Oberfläche des Faservlieses aufgebracht wird, und wobei die Schmelze eine elastische Schicht ausbildet, die mit der Oberfläche des Faservlies verbunden ist.

9. Das dehnbare, elastische Laminat nach Anspruch 8, wobei das Faservlies natürliche Fasern umfasst, die aus der Gruppe ausgewählt werden, bestehend aus der Cellulose, Baumwolle, Hanf, Wolle und Flachs.

## Revendications

1. Stratifié élastique étirable, comprenant :
au moins un tissu non tissé lacé par filage qui est étirable dans au moins une direction ; et
un matériau élastique appliqué sous forme de produit fondu sur une surface principale dudit tissu non tissé lacé par filage,
dans lequel le produit fondu forme une couche élastique liée à ladite surface dudit tissu non tissé lacé par filage,
dans lequel la couche élastique se compose d'une pluralité de couches formées en extrudant conjointement le matériau élastique et au moins un autre matériau.

2. Stratifié élastique étirable selon la revendication 1, dans lequel le tissu non tissé lacé par filage comprend un matériau sélectionné parmi le groupe constitué de polyéthylène téréphtalate, polybutylène téréphtalate, polypropylène téréphtalate, polyamides, polyacrylates, polyacrylonitrile, viscose, aramide, alcool polyvinylique et rayonne.

3. Stratifié élastique étirable selon la revendication 1, dans lequel le matériau élastique comprend un copolymère à blocs styrène.

4. Stratifié élastique étirable selon la revendication 3, dans lequel le copolymère à blocs styrène comprend SEBS.

5. Stratifié élastique étirable selon la revendication 1, dans lequel l'au moins un autre matériau est un second matériau élastique.

6. Stratifié élastique étirable selon la revendication 1, dans lequel ledit stratifié comprend un second tissu non tissé et ledit matériau élastique est appliqué sur une surface principale dudit second tissu non tissé de sorte que la couche élastique soit prise en sandwich entre lesdites surfaces principales du tissu non tissé lacé par filage et du second tissu non tissé, et liée à celles-ci.

7. Stratifié élastique étirable selon la revendication 6, dans lequel le second tissu non tissé est un tissu non tissé lacé par filage.

8. Stratifié élastique étirable selon la revendication 1, dans lequel ledit tissu non tissé possède un point de fusion qui est supérieur à la température dudit produit fondu lorsque ledit produit fondu est appliqué sur la surface dudit tissu non tissé, et dans lequel le produit fondu forme une couche élastique liée à ladite surface dudit tissu non tissé.

9. Stratifié élastique étirable selon la revendication 8, dans lequel le tissu non tissé comprend des fibres naturelles sélectionnées parmi le groupe constitué de cellulose, coton, chanvre, laine et lin.
